# EUROPÄISCHE PATENTANMELDUNG

(11) **EP 0 989 394 A2**
(43) Veröffentlichungstag der Anmeldung: **29.03.2000**
(21) Anmeldenummer: 99114450.2
(22) Anmeldetag: 23.07.1999
(51) Int. Cl.: G01L 5/16, G01M 17/02, B60C 11/24, B60T 8/00

(54) **Fahrzeugreifen mit einem Sensor im radial inneren Bereich der Lauffläche oder unterhalb der Lauffläche**

(30) Priorität: 26.08.1998 DE 19838638
(71) Anmelder: Continental Aktiengesellschaft, 30165 Hannover (DE)
(72) Erfinder: Fries, Volkmar, Dr., 30926 Seelze (DE)

(57) **Zusammenfassung**

Die Erfindung bezieht sich auf einen Fahrzeugreifen mit einer Lauffläche (2), Profilrillen (3) darin und einigen TWIs (4). TWIs sind üblicherweise 1,6 mm hohe Grundanhebungen innerhalb irgendwelcher Profilrillen und zeigen die Grenze zulässigen Verschleisses an. Wie an sich zur Verbesserung der Fahrzustandskontrolle bekannt, soll ferner im radial inneren Bereich der Lauffläche (2) oder unterhalb der Lauffläche (2) zumindest ein Sensor (S) eingebaut sein zur Erfassung der vom Reifen (1) übertragenen Längs- und/oder Querkräfte. Dabei soll besagter Sensor (S) ein Krafteinleitungsglied (S1) und ein signal-generierendes Glied (S2) aufweisen. Solche Sensoren, die bevorzugt als passive Funkübertragungsglieder ausgeführt sind, beanspruchen einen erheblichen Bauraum. Der Vorteil passiver Funkübertragungsglieder liegt darin, dass im rotierenden Rade keine elektrische Versorgungsspannung bereit gehalten werden muss.

Zwecks optimaler Ausnutzung des nur knapp zur Verfügung stehenden Bauraumes soll erfindungsgemäß zumindest ein Teil des signal-generierenden Gliedes eines Sensors innerhalb eines TWIs angeordnet sein.

## Beschreibung

Die Erfindung bezieht sich auf einen Fahrzeugreifen gemäß dem Oberbegriff des Patentanspruches 1. Demgemäß weist dieser Reifen (1) eine Lauffläche (2), Profilrillen (3) darin und einige TWIs [tread wear indicators] (4) auf. TWIs sind in den meisten Straßenverkehrordnungen gefordert zur Überwachung ausreichender Profiltiefe. Sie sind - hierzulande üblicherweise 1,6 mm hohe - Grundanhebungen innerhalb irgendwelcher Rillen, meistens innerhalb gut sichtbarer, breiter Längsrillen.

Gattungsgemäß soll ferner im radial inneren Bereich der Lauffläche (2) oder unterhalb der Lauffläche (2) zumindest ein Sensor (S) eingebaut sein zur Erfassung der vom Reifen (1) übertragenen Längs- und/oder Querkräfte. Dabei soll besagter Sensor (S) ein Krafteinleitungsglied (S1) und ein signalgenerierendes Glied (S2) aufweisen.

Es ist an sich bekannt, Sensoren im radial inneren Bereich der Lauffläche oder unterhalb der Lauffläche, kurzum also - insoweit der Blickwinkel auf die vorherrschenden Gürtelreifen beschränkt wird - zwischen der obersten Gürtellage und dem Profilrillengrund anzuordnen, siehe dazu DE 39 37 966 A1, DE 43 35 938 A1 und EP 0 602 679 B1. Die uns bekannten, dort angeordneten Sensoren leben alle mit dem Problem, eine elektrische Energieversorgung zu benötigen. Nach bisherigem Stande der Technik scheint unter den verschiedenen Möglichkeiten der Energie-Versorgung die Anordnung einer knopfzellenartigen Batterie innerhalb des Reifens oder der Felge das kleinste Übel zu sein.

Solche Vorrichtungen haben sich in Versuchsfahrzeugen zwar bewährt, haben aber bis heute nicht den Sprung in eine Serienproduktion geschafft und werden ihn voraussichtlich auch in Zukunft nicht schaffen, weil solche Betterien teuer, kurzlebig und entweder schwer austauschbar oder leicht stehlbar sind.

Als Problemumgehung wurde bereits vorgeschlagen, die längs- und/oder querkraftsensierenden Sensoren gar nicht im schwer versorgbaren Reifen anzuordnen, sondern in einem nicht-rotierenden System in der Nähe des Reifens, beispielsweise an einem Lenker der Radaufhängung. Unter der Hinnahme, dass nicht die letztlich interessierenden Kräfte direkt gemessen werden, sondern Veränderungen von Zeitspannen, lehrt solches die DE-OS 44 35 160 A1 und die darauf aufbauende PCT/EP95/03864. Zwar stellt dieses System nach bisheriger Kenntnis bereits einen Fortschritt gegenüber den bislang durch ein Polrad mit Information versorgten ABS-Systemem dar, weil die Masse der Felge und Nabe mit ihrer Hülse nicht mehr in die Trägheitsbetrachtung eingeht, also eine flinkere Kontrolle ermöglicht, jedoch schlägt die Gürtelträgheit nach wie vor auf die äußerst erreichbare Flinkheit durch.

Von daher besteht ein Interesse, solche Sensorsysteme zum Einbau im Laufflächenbereich zu schaffen, die zum einen - wie an sich bekannt - besonders direkt die interessierenden Längs- und/oder Querkräfte sensieren, zum anderen aber ohne eine elektrische Stromversorgung auskommen.

Aus den Fortschrittsberichten des VDI (Verband Deutscher Ingenieure) Reihe 8, Nr. 515 ist ein Bericht über das vom Sonderforschungsbereich 241 der Deutschen Forschungsgemeinschaft an der Technischen Hoschule Darmstadt veranstaltete Kolloquium "Berührungslose Messdaten- und Leistungsübertragung" vom 30. November 1995 bekannt.

Dort berichtet die Siemens AG auf den Seiten 62 bis 79 über "Funksensorik mit passiven Oberflächenwellen Komponenten" und schlägt ein als "Sensor" (Dazu gehören aber tatsächlich noch andere Glieder) bezeichnetes signal-generierendes Glied vor, welches einen längenveränderlichen Stab enthält mit einer Schicht aus einem oder mehreren piezo-elektrischen Kristallen, beispielsweise Siliziumdioxyd. Dieses Glied soll mit passiver Funkübertragung arbeiten, d. h. ohne sonstige Energiezufuhr auskommen. Dazu wird eine von einem Sender empfangene elektromagnetische Welle in eine akustische Oberflächenwelle der piezo-elektrischen Kristalischicht umgesetzt, an die eine elektrische Welle gleicher Fortpflanzungsgeschwindigkeit durch die Piezo-Eigenschaft gekoppelt ist.

Wesentlich ist, dass die so determinierte Fortpflanzungsgeschwindigkeit um etwa 5 Zehnerpotenzen unterhalb der Fortpflanzungsgeschwindigkeit elektromagnetischer Wellen liegt. Die Reflektion erfolgt dadurch so weit verspätet, dass sie nicht im Echo des primären Sendeimpulses selbst unauflösbar untergeht.

Die Größe der Verzögerung hängt von der Längenänderung und damit Wellenlaufwegsänderung ab. Die Längenänderung ist aber andererseits über das Hooksche Gesetz mit der Biegespannung und damit der eingeleiteten Kraft proportional verknüpft.

Mit Rücksicht auf die Verfahrenstechnik zur Herstellung solcher passiv signal-generierenden Glieder und auf die durch die Fernmeldegesetzgebung beschränkten Frequenzbänder sind solche passiv signal-generierenden Glieder nicht beliebig weit miniaturisierbar.

Zur Kleinhaltung des Rollwiderstandes des Reifens und zur Kleinhaltung der Menge teurer Kautschukmischung verbleibt bei modernen Reifen zwischen der obersten Gürtellage bzw. Bandage bzw. (bei einigen Diagonalreifen direkt der) Karkasse einerseits und dem Profilrillengrund andererseits nur so dünnes Gummi, dass die Anordnung eines größeren signal-generierendes Gliedes hierzwischen nicht möglich war.

Unter Berücksichtigung vorgenannten Interesses und des zuletzt genannten - als nächstliegend eingeschätzten - Standes der Technik stellt sich die Aufgabe, ohne Beeinträchtigung der Reifeneigenschaften, insbesondere seines Rollwiderstandes, einen größeren Bauraum für einen oder mehrere im Laufflächenbereich anzuardnenden Sensor zu schaffen.

Diese Aufgabe wird erfindungsgemäß dadurch gelöst, dass der Sensor in ein Krafteinleitungsglied und ein signal-generierendes Glied unterteilt wird und, dass zumindest ein Teil des signal-generierendes Gliedes (S2) zumindest eines der Sensoren (S) innerhalb eines TWIs angeordnet ist. Vorzugsweise sind alle signal-generierenden Glieder zur Gänze innerhalb jeweils eines TWIs angeordnet.

Vorzugsweise ist gemäß Anspruch 2 das jeweils zugehörige Krafteinleitungsglied (S1) in einem an den besagten TWI, der das signal-generierende Glied (S2) enthält, angrenzenden Positiv (5) angeordnet.

Um mit ungekrümmten Piezo-Flächen arbeiten zu können, die besonders kostengünstig in hoher Reproduziergenauigkeit möglich erscheinen, enthält vorzugsweise gemäß Anspruch 3 das signal-generierende Glied (S2) einen Biegestab, von dem zumindest eine auf Zug- oder Druck belastete Oberfläche mit einer Schicht aus einem oder mehreren piezo-elektrischen Kristallen - vorzugsweise Siliziumdioxyd - beschichtet ist.

Mit dieser den gegebenen Bauraum im Reifen optimal ausnutzenden Anordnung ist ein Fahrzeugreifen gemäß Anspruch 4 ermöglicht, der dadurch gekennzeichnet ist,
- dass das signal-generierende Glied (S2) mit passiver Funkübertragung arbeitet,
- d. h. ohne sonstige Energiezufuhr von einem nicht-rotierenden Gerät (G) empfangene Funksignale in einer eindeutigen Korrelation zur zu sensierenden Größe verändert oder phasenversetzt an einen Empfänger sendet,
- wozu eine empfangene elektromagnetische Welle in eine akustische Oberflächenwelle der piezo-elektrischen Kristalischicht umgesetzt wird, an die eine elektrische Welle gleicher Fortpflanzungsgeschwindigkeit durch die Piezo-Eigenschaft gekoppelt ist.

Die Erfindung wird nachfolgend anhand dreier Figuren näher erläutert. Es zeigt:
- Fig. 1: auszugsweise im Längsschnitt einen erfindungsgemäßen Fahrzeugluftreifen mit Radialkarkasse, Gürtellagen und einem erfindungsgemäß gegliederten und angeordneten Sensor,
- Fig. 2: in Draufsicht einen Ausschnitt der Lauffläche mitsamt dem Sensor und
- Fig. 3: im Querschnitt den gleichen Ausschnitt wie Figur 2.

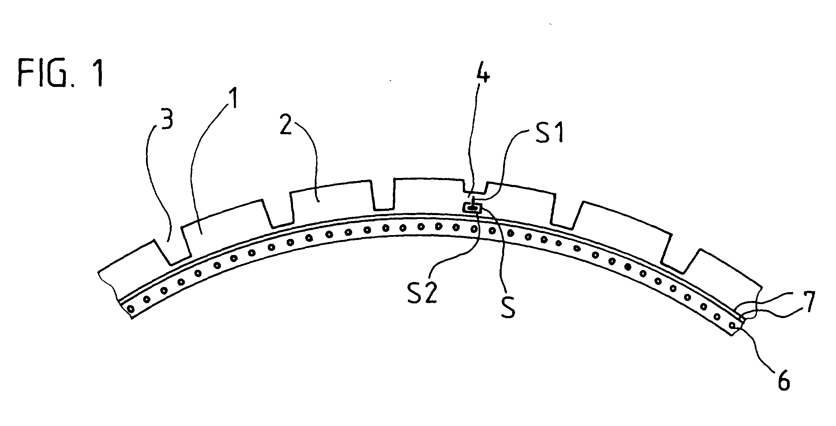

**Figur 1** zeigt auszugsweise im Längsschnitt einen erfindungsgemäßen Fahrzeugreifen 1 als Luftreifen mit Radialkarkasse 6, Gürtellagen 7 und darüber einer Lauffläche 2 mit - hier quer verlaufenden - Profilrillen 3. In einer dieser quer verlaufenden Rillen 3, auch kurz Querrillen genannt, ist ein TWI angeordnet; diese Rillengrundanhebung ist mit dem Bezugszeichen 4 markiert.

Innerhalb dieses TWIs bzw. in einer axialen Flucht mit diesem TWI ist erfindungsgemäß ein Sensor S angeordnet, der in ein Krafteinleitungsglied S1 und ein signal-generierendes Glied S2 gegliedertet ist.

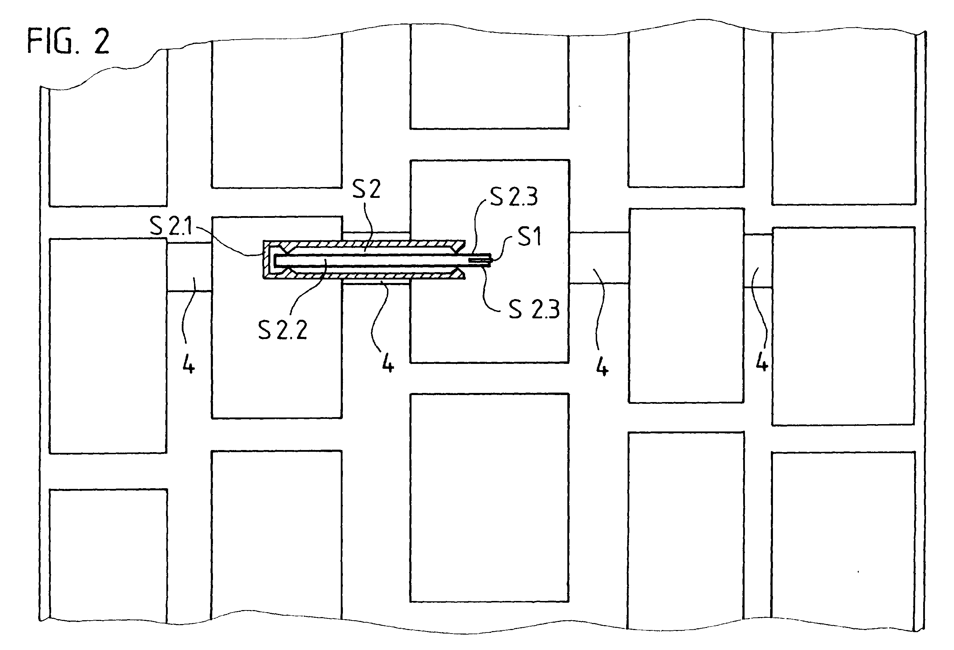

**Figur 2** zeigt vergrößert in Draufsicht den Bereich dieses TWIs 4 mitsamt dem Sensor S darin. Das im Laufflächengummi festhaftend einvulkanisierte Gehäuse S2.1 des signal-generierenden Gliedes S2 ist in diesem Ausschnitt der Lauffläche 2 teilweise aufgebrochen, um den darin angeordneten Biegestab S2.2 mit seiner Si0₂-Beschichtung S2.3 sichtbar zu machen.

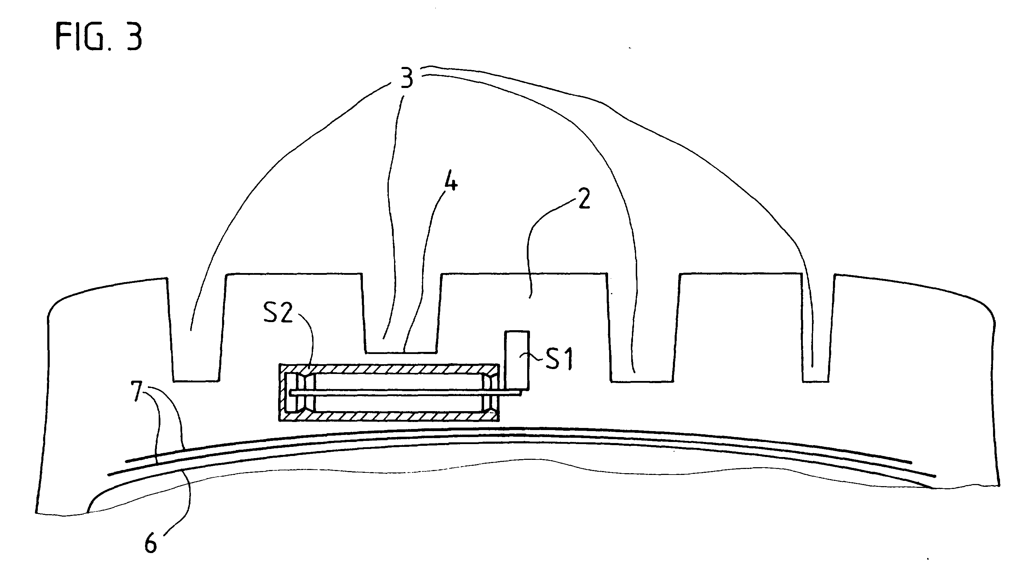

**Figur 3** zeigt im Querschnitt den gleichen Ausschnitt wie Figur 2. Man erkennt, dass die radiale Bauhöhe des signalübertragenden Gliedes größer ist als der Abstand zwischen dem Grunde einer jeden - hier als Längsrille zu sehenden - Rille 3 einerseits und der obersten Gürtellage 7 andererseits. Zwar hätte der Bauraumkonflikt auch entschärft werden können durch eine Begrenzung des signalübertragenden Gliedes S2 in der axialen Richtung auf einen Wert kleiner der Positivbreite von Rille zu Rille, jedoch hätte nach bisheriger Erkenntnis diese Länge nicht für einen gleichermaßen zuverlässigen wie zulässigen Funkverkehr ausgereicht. Deutlich ist hier der Kern der erfindungsgemäßen Lösung zu sehen, nämlich das signalübertragende Glied unterhalb eines TWIs anzuordnen, womit 1,6 mm an zusätzlich zulässiger radialen Bauhöhe erreicht ist; und dies reicht aus.

Es versteht sich, dass anstelle des Biegestabes auch ein anderes mit geeigneter Steifigkeit verformbares Element verwendet werden kann, beispielsweise ein Torsionsstab, der vorzugsweise als Zylinderrohr ausgebildet würde.

Ein solcher Torsionsstab hätte den Vorteil, die größte Signalausbeute im Verhältnis zum Baugewicht zu bringen, allerdings im noch frühen Entwicklungsstadium den Nachteil, die Beschichtung einer gekrümmten Fläche, nämlich der Zylindermantelfläche des Torsionsstabes, zu erfordern. Es wird erwartet, dass bei einer Durchsetzung in der Großserie die konstruktiven Vorzüge des Torsionsstabes als Verformungselement die verfahrenstechnischen Schwierigkeiten überwiegen werden, zumal die zu beschichtende Oberfläche nur eindimensional und nicht zweidimensional gekrümmt wäre.

Die Piezo-Beschichtung würde für eine solche ebenfalls zum Schutzumfang gehörende Abwandlung des gezeigten Ausführungsbeispieles zweckmäßigerweise wendelförmig mit einem Winkel von etwa 45° zur Längsrichtung aufgebracht. Die Signalstärke und die Auflösung würde besonders groß, wenn eine solche Piezo-Wendel mit mehreren Windungen aufgebracht würde; unbeschadet dessen wird ein verwertbares Signal aber auch schon beim Bruchteil einer einzigen Windung erwartet.

Zusammenfassend ist also das Entscheidende der Erfindung, dass zwecks optimaler Ausnutzung des nur knapp zur Verfügung stehenden Bauraumes zumindest ein Teil des signal-generierenden Gliedes eines Sensors innerhalb eines TWIs angeordnet ist. So wird der bislang bestehende Nachteil passiver Funkübertragungsglieder, ihr relativ hoher Bauraumbedarf, verschmerzbar und es kann ihr wesentliche Vorteil genossen werden, dass im rotierenden Rade keine elektrische Versorgungsspannung bereit gehalten werden muss.

Eine Bezugszeichenliste ist Bestandteil der Beschreibung.

### Bezugszeichenliste:

- 1: Fahrzeugreifen
- 2: Lauffläche
- 3: Profilrillen
- 4: TWI [tread wear indicators]
- 5: Positiv von 2
- 6: Radialkarkasse
- 7: Gürtellagen
- G: nicht-rotierendes Gerät
- S: Sensor
- S1: Krafteinleitungsglied von S
- S2: signal-generierende Glied von S
- S2.1: Gehäuse von S2
- S2.2: Biegestab von S2
- S2.3: Piezo-Beschichtung auf S2.2

## Patentansprüche

1. Fahrzeugreifen (1) mit einer Lauffläche (2), Profilrillen (3) darin und einigen TWIs [tread wear indicators] (4),
- wobei im radial inneren Bereich der Lauffläche (2) oder unterhalb der Lauffläche (2) zumindest ein Sensor (S) eingebaut ist zur Erfassung der von besagtem Reifen (1) übertragenen Längs- und/oder Querkräfte,
- wobei besagter Sensor (S) ein Krafteinleitungsglied (S1) und ein signal-generierendes Glied (S2) aufweist,
**dadurch gekennzeichnet**,
- dass zumindest ein Teil des signal-generierendes Gliedes (S2) zumindest eines der Sensoren (S) innerhalb eines TWIs angeordnet ist.

2. Fahrzeugreifen (1) nach Anspruch 1, dadurch gekennzeichnet, dass das Krafteinleitungsglied (S1) in einem an den besagten TWI, der das signal-generierende Glied (S2) enthält, angrenzenden Positiv (5) angeordnet ist.

3. Fahrzeugreifen (1) nach Anspruch 1 oder 2, dadurch gekennzeichnet, dass das signal-generierende Glied (S2) einen Biegestab enthält, von dem zumindest eine auf Zug- oder Druck belastete Oberfläche mit einer Schicht aus einem oder mehreren piezo-elektrischen Kristallen - vorzugsweise Siliziumdioxyd - beschichtet ist.

4. Fahrzeugreifen (1) nach einem der vorangehenden Ansprüche, dadurch gekennzeichnet,
- dass das signal-generierende Glied (S2) mit passiver Funkübertragung arbeitet,
- d. h. ohne sonstige Energiezufuhr von einem nicht-rotierenden Gerät (G) empfangene Funksignale in einer eindeutigen Korrelation zur zu sensierenden Größe verändert oder phasenversetzt an einen Empfänger sendet,
- wozu eine empfangene elektromagnetische Welle in eine akustische Oberflächenwelle der piezo-elektrischen Kristallschicht umgesetzt wird, an die eine elektrische Welle gleicher Fortpflanzungsgeschwindigkeit durch die Piezo-Eigenschaft gekoppelt ist.
